# EUROPEAN PATENT SPECIFICATION

(11) **EP 2 339 136 B1**
(45) Date of publication and mention of the grant of the patent: **21.08.2013**
(21) Application number: 09180647.1
(22) Date of filing: 23.12.2009
(51) Int. Cl.: F01N 3/20

(54) **Method and device for controlling an scr catalytic converter of a vehicle**
Verfahren und Vorrichtung zur Steuerung eines SCR-Katalysatorwandlers eines Fahrzeugs
Procédé et dispositif de contrôle d'un convertisseur catalytique SCR d'un véhicule

(43) Date of publication of application: 29.06.2011
(73) Proprietor: FPT Motorenforschung AG, 9320 Arbon (CH)
(72) Inventor: Auckenthaler, Theophil, 9011, St. Gallen (CH)
(74) Representative: Borsano, Corrado

(56) References cited:
- DE-A1- 10 301 606
- US-A1- 2004 098 974
- US-A1- 2007 125 071
- US-A1- 2008 229 728
- US-A1- 2009 049 827
- US-A1- 2009 133 384

## Description

### Field of the invention

The present invention relates to a method and device for controlling an SCR catalytic converter of a vehicle, in particular in the field of the vehicular combustion engines.

### Description of the prior art

Many combustion engines which have to comply with the current and future emission legislation make use of a selective catalytic reduction (SCR) system in order to reduce the nitrogen oxide (NOx) emissions.

In current operational systems, a urea solution is injected in the exhaust gas upstream of the SCR catalyst. The urea is transformed into ammonia (NH3), which in turn reduces the NOx to harmless nitrogen (N2) and water (H2O) in the SCR catalyst. The relevant chemical reactions occur after adsorption of the ammonia on the catalyst surface. Generally, the NOx conversion efficiency of the SCR catalyst is dependent on the amount of stored (i.e. adsorbed) ammonia, the temperature, the space velocity, i.e. the gas turnover in the catalyst per time unit, the N02/NO ratio of the NOx, and other conditions. The temperature and the space velocity are usually dependent on the engine operation and cannot be directly influenced by the SCR controller. The amount of stored ammonia is usually adjusted by a dedicated controller, which controls the estimated level of the ammonia. The N02/NO ratio is dependent on the performance of a diesel oxidation catalyst (DOC) and on a diesel particle filter (DPF) mounted upstream of the SCR catalyst. In current concepts, the N02/NO ratio cannot be adjusted directly, since it mainly depends on the DOC/DPF temperatures, the space velocity, and on the soot loading of the DPF.

Current SCR control systems make use of a model, where the SCR catalyst is modeled as one NH3 storage tank. The amount of stored NH3 is calculated from the injected urea, and from the amount of NH3 consumed by the SCR reactions. The amount of stored ammonia is then adjusted such that the desired NOx conversion efficiency is achieved. An outer control loop using an NOx measurement device is then used to adjust the injected urea quantity such that the estimated, by a model, and the measured NOx conversion efficiency converge.

Known schemes of a SCR controller are described in e.g. Schär: "Control of a Selective Catalytic Reduction Process" (PhD thesis Nr. 15221, ETH Zurich) or in Chi, Da Costa: "Modeling and Control of a Urea-SCR Aftertreatment System, SAE 2005-01-0966, or in Herman, Wu, Cabush, Shost: "Model Based Control of SCR Dosing and OBD Strategies with Feedback from NH3 Sensors", SAE 2009-01-0911.

The known scheme of a SCR controller of the prior art includes a closed loop controller based on an NOx sensor downstream of the SCR catalyst.

The known control approach lacks of accuracy, especially, when NH3 slip should be accounted for, as well.

An example of modeling of the behavior of the catalyst is given in US2009133384.

Control systems of the prior art aim at controlling the storage level of the entire SCR or at controlling an overall NOx conversion efficiency. Some concepts even include the calculation and limitation of NH3 slip, i.e. of the dispersing of NH3 in the exhaust gas, without reacting with NOx. However, this usually implies a parallel controller, which, then, is combined with the NOx controller by e.g. minimum selection of the urea quantity to be injected. Generally, activation or deactivation criteria of the controllers upon sensor failure or shut off/on are awkward from an implementation point of view. Currently available NOx sensors exhibit a significant cross sensitivity to NH3.

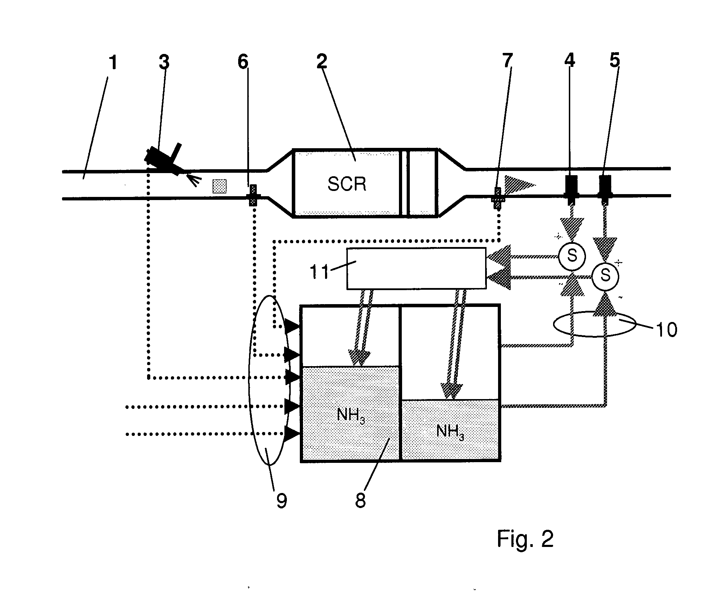

Figure 2 of the prior art shows a typical sensor output characteristic dependent on the injected urea.

Such a characteristic is a pair function, therefore, it is not a bijective function.

Under normal conditions, the NOx sensor output decreases with increasing urea injection. However, when the NH3 slip starts to increase, the characteristic of NOx sensor output turns and the sensor output increases with increasing urea injection.

The ambiguous characteristic of the NOx sensor leads to the problem that potential NH3 slip may be interpreted as NOx and vice versa. This might lead to a destabilisation of the controller. For example, when NH3 is interpreted as NOx, the control algorithm will increase the urea injection in order to reduce the NOx emissions. This will lead to a further increase of the NH3 slip, which in turn leads to a further increase of the urea injection, since the NH3 is interpreted as NOx.

Hence, the sensor signal is ambiguous, and its ambiguity can destabilize the control system. In order to differentiate between NOx and NH3, the urea injection has to be excited, e.g. by toggling between two levels. Known systems rely on fast response, which is not given with large catalyst volumes in the future, and/or on quasi steady-state operating conditions, which hardly occur during normal operation.

Examples of control schemes and strategies of the prior art are given in US2009/133384, US2004/098974, US2008/229728 and DE10301606.

The most relevant strategy of the prior art is described in US2009/049827, whom features are disclosed in the preamble of the claim 1.

### Summary of the invention

Therefore it is the main object of the present invention to provide a method and device for controlling an SCR catalytic converter of a vehicle which overcomes the above problems/drawbacks.

An observer device forces the estimation of NOx or NH3 to converge to measured values, i.e. the observer regulates gains/parameters of said estimation using as feedback the difference/error between said estimation values and said measured values

Hereby, the main advantage of the invention is that the observer knows at all times the polarity of the sensor model, i.e., the observer inherently distinguishes at all times on which side of the characteristic it actually is, whether the NOx signal increases or decreases with increasing amounts of stored ammonia. Hence, the sensor output ambiguity is overcome.

Therefore, the controller only controls the level of the estimated/modelled sensor output. If no real sensor is available, the corresponding observer feedback gain is switched to zero, which simplifies the implementation significantly, and make the same ECU (Electronic Control Unit of the vehicle) suitable for several engine setups or applications in several working conditions, for example, at the start up of the engines.

According to a further aspect of the present invention, the SCR catalyst is considered as divided in a plurality of cascaded cells, and only the storage level of the first cell is controlled, in spite of the fact that the set point is calculated from an overall NOx conversion efficiency demand or from the NH3 slip limitation constraint.

Since ECU calculation and memory resources are limited, an advantageous implementation of the present method provides the step of considering the SCR catalyst as comprising only few storage cells and controlling the NH3 stored only in the first one of said cells.

According to a preferred embodiment, the controller calculates one of the following set points:
- NOx Control: Amount of stored NH3 in the first cell in order to reach the required NOx conversion efficiency target of the entire SCR catalyst, i.e. taking into account the contributions, in terms of NOx efficiency conversion, of the other storage cells from the second to the n-th.
- NH3 Control: Amount of stored NH3 in the first cell in order to reach the required NH3 level at the outlet of the SCR catalyst, also taking into account the contributions, in terms of NH3 storage levels, of the other storage cells from the second to the n-th.

According to another embodiment, the controller calculates both set points, then the actual set point is obtained from a minimum selection.

Therefore, a multiple cell approach is advantageous, since the accuracy can be significantly improved, if the axial distributions of the gas components and the stored ammonia are taken into account.

According to another aspect of the invention, the controller implementing the method hereby depicted is able to detect and avoid NH3 slip, if an NH3-sensitive NOx sensor is used alone, without any specific NH3 measurement device. The SCR catalyst method incorporates the NOx sensor model, including NH3 cross-sensitivity.

If a divergence of the controller is detected, because a non-present NH3 slip is detected or because a present NH3 slip is not detected, the controller inverts the stored NH3 and NOx sensor polarity for the calculation of the present operating point on the sensor characteristic.

Advantageously, no external NH3 slip detection system is necessary, since the method and the controller implementing the method can be used directly.

These and further objects are achieved by means of a method and device as described in the attached claims, which form an integral part of the present description.

### Brief description of the drawings

The invention will become fully clear from the following detailed description, given by way of a mere exemplifying and non limiting example, to be read with reference to the attached drawing figures, wherein:

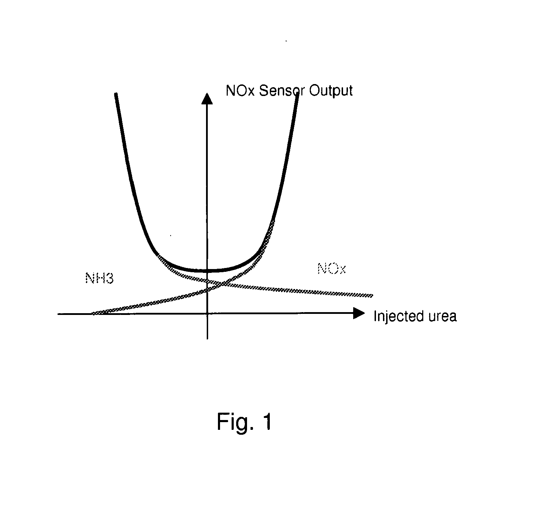

- Fig. 1 shows a known ambiguous NOx sensor output characteristic,
- Fig. 2 shows an SCR control scheme according to the present invention,
- Fig. 3 shows an SCR model-based control scheme according to the sketch of figure 2, based on a NOx efficiency target,
- Fig. 4 shows an SCR model-based control scheme according to the sketch of figure 2, based on a NH3 slip level set point,
- Fig. 5 shows an error recovery operated according to the present invention when NOx is detected as NH3,
- Fig. 6 shows an error recovery operated according to the present invention when NH3 is detected as NOx.

The same reference numerals and letters in the figures designate the same or functionally equivalent parts.

### Detailed description of the preferred embodiments

The method and device for controlling the SCR catalyst comprises the fact of considering a model of SCR catalyst as divided in multiple storage cells. In each cell, the amount of stored ammonia and the relevant exhaust gas components (NOx, NH3, etc.) are calculated. Additionally, the method can account for the temperature, where the temperature of each cell is calculated. Therefore, the method estimates, by means of a sensor model, the behaviour of the really mounted sensors, being able to distinguish the operating point on the sensor characteristic and being able to invert the curve polarity.

As a very important feature, the NH3 sensitivity of the NOx sensor is reflected by the model.

With reference to fig. 2, the physical exhaust line 1 comprises a real SCR catalyst 2, including optionally an oxidation catalyst to reduce the NH3 slip, a urea dosing module 3, a NOx sensor 4, an NH3 sensor 5, upstream and downstream temperature sensors 6, 7.

An NH3 storage model 8 is fed with the physically relevant inlet and outlet quantities, such as at the input 9 exhaust mass flow, catalyst upstream NOx (NO and N02) concentration and temperature, the amount of injected urea, and exhaust mass flow downstream.

The estimated sensor outputs 10, respectively of NOx and NH3, are compared to the measured outputs of sensors 4 and 5. The errors are then used in an observer loop with a given gain 11, to correct the state variables of the estimating models, which are the amounts of stored ammonia in each cell, such that the calculated sensor outputs converge to the measured ones.

One of the innovative aspects of the present invention is the concept of controlling only the ammonia storage level of the first cell (in the gasses crossing direction) of the multiple cells in which the SCR catalyst is considered divided.

The controller is the same for the NOx and the NH3 slip control. Only the set points of the two control goals are calculated separately. The actual set point is obtained from a minimum selection, since the NH3 slip controller is actually only an NH3 slip limitation.

The proposed control concept has two purposes. On the one hand, a target NOx conversion efficiency of the SCR catalyst has to be reached. On the other hand, an NH3 slip limit must not be exceeded. Thereby the NH3 slip limitation is dominant.

Since the dynamics of the storage cells from the 2-nd to the n-th are slow as compared to the dynamics of the first cell, only the latter is directly controlled.

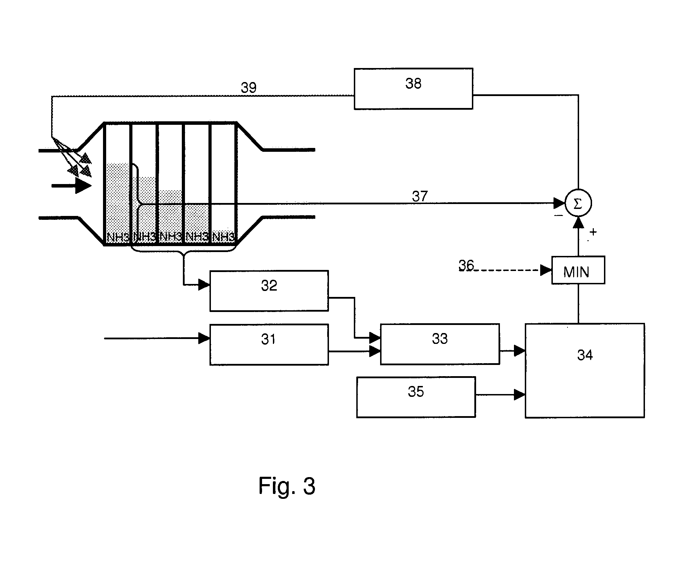

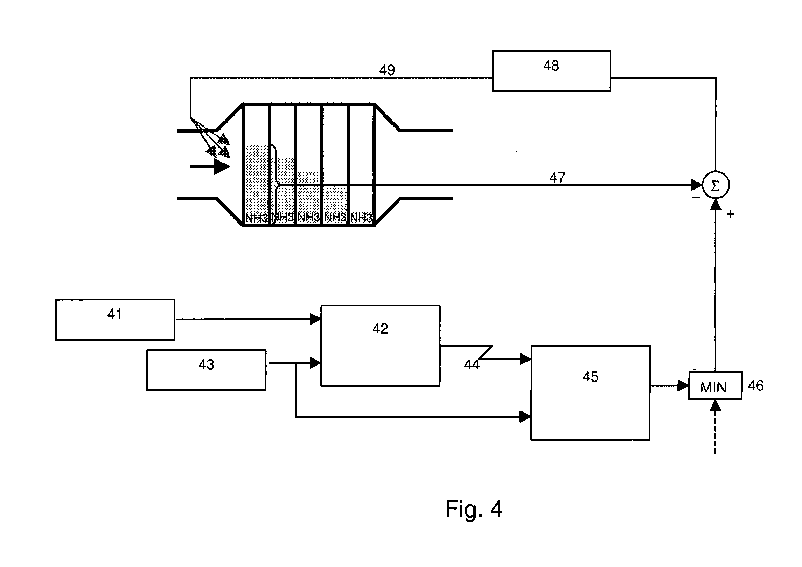

Hence, a control scheme can be of NOX control based type and/or NH3 slip limitation type.
- NOx control: Figure 3 shows a scheme of the NOx control concept. From the overall NOx conversion efficiency target 31 and from the achieved efficiency of cells 32 from the 2-th to the n-th, calculated from the current storage levels, an efficiency target for the first cell 37 is calculated in block 33. This efficiency target is converted into a set point for the NH3 storage level of the first cell in block 34, where the current state of the system 35 (temperature, space velocity, N02/NO ratio, etc.) is taken into account. The minimum of the NOx control set point 34 and of the NH3 control set point 36 (see below) is selected and compared to the actual value of the NH3 level in the first cell 37. The offset is then fed to a controller 38, which adjusts the urea or NH3 quantity 39.
- NH3 slip limitation: a scheme of the NH3 limitation concept is depicted in Figure 4. From the NH3 limit at the tail of the SCR catalyst 41, a storage level of the last cell is calculated in block 42 using the temperature and other operating conditions, like space velocity and N02/NO ratio in block 43. Starting from the last element, an NH3 storage level is calculated for each cell 44, which is necessary to reach the desired NH3 storage level of the last cell under steady state current operating conditions (temperature, space velocity, N02/NO ratio, etc.). Finally, the desired storage level of the first cell 45 is obtained, which is fed into the minimum selection 46 for the NH3 level set point. The minimum of the NH3 control set point 45 and of the NOx control set point 46 (see above) is selected and compared to the actual value of the NH3 level in the first cell 47. The offset is then fed to a controller 48, which adjusts the urea or NH3 quantity 49. Since ECU calculation and memory resources are limited, an advantageous implementation of the method could model the SCR as a 2÷3 storage cells.

The method can be applied to NOx and NH3, or other nitrogenated species, such as NP2, NO, N20. Advantageously, implementing the present method, the following details, variations and modifications can be achieved:
- Variable feedback gains. The feedback gains, i.e. the adjustment of the state variables (amount of stored NH3 or others) imposed by the deviations between the measured and calculated sensor outputs, can be varied upon the operating point and/or under special operating conditions, such as temperature, space velocity, stored ammonia or others. Under normal operating conditions, a positive NOx sensor error leads to a decrease of the stored ammonia, in order to increase the calculated NOx sensor output to the level of the measured one. However, if too much urea is injected and the NOx sensor mainly measures NH3, the modelled level of stored ammonia is increased in order to eliminate the sensor deviation. This behaviour is automatically captured when using a non-linear observer method, such as an extended Kalman filter, and similar ones, please see e.g. Welch, Bishop: "An Introduction to the Kalman Filter", URL http://www.cs.unc.edu/∼welch/media/pdf/kalman_intro.pdf. Further conditions can make a change of the feedback gain necessary: Firstly, if it is known that a sensor output is inaccurate under well-defined conditions, for example, during transients, the feedback can be temporarily weakened, i.e., the correction is reduced. Secondly, feedback gains can be temporarily increased, if required. If, for example, the NH3 slip is detected by the NH3 sensor, the NOx sensor feedback is weakened and the NH3 sensor feedback increased in order to priorise the NH3 sensor and to ensure a correct NH3 slip estimation by the controller. This is necessary to allow the controller to take appropriate measures (i.e. reduce the urea injection)

- Extension of the control method, by introducing an identification method, for example, an extended Kalman Filter. Thereby, additional state variables are introduced, which represent constant to slowly drifting parameters, such as catalyst storage capacity or offsets of urea injection or sensors, urea quality. The observer feedback loop also corrects these parameters and thus allows the adaptation of the model to long-term changes such as ageing of the system or concentration drift in the urea solution.
- Availability of sensor information: Gas sensors usually cannot be operated under all conditions. Especially during cold start operation, when water droplets are present in the exhaust gas, some sensors must be shut off. Under these conditions, the feedback loop is simply turned off, i.e., the control scheme runs in open-loop and it is not corrected with the sensor information.
- The control method can be extended with any nitrogenated gas sensor, of which output can be estimated by means of a model. Temperature sensors or gas species not discussed here (e.g. N20) might be an option.

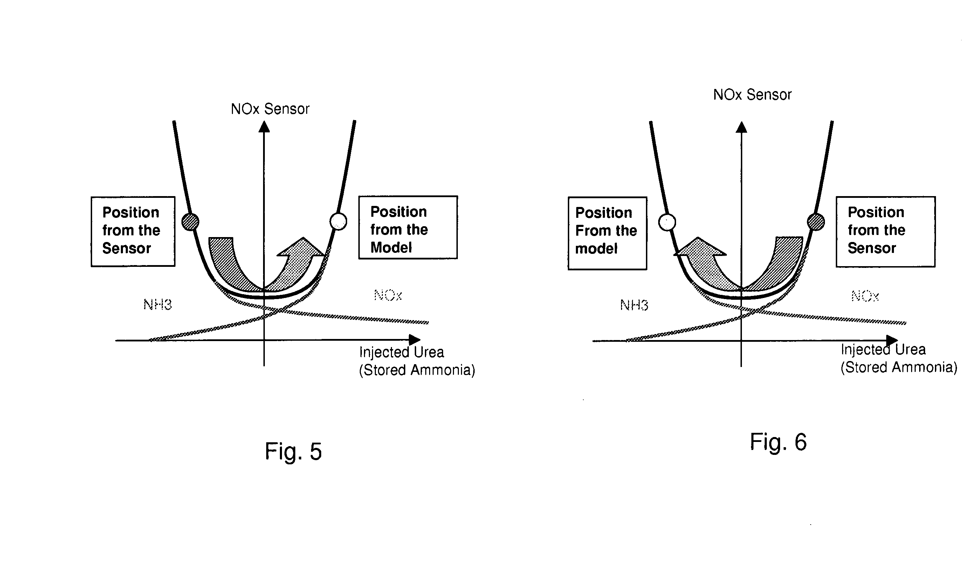

The shown control concept inherently uses the storage model and the controller to detect whether the NOx (or NH3) sensor signal is interpreted in a correct way. Hereby, the main advantage of the invention is that the controller "knows" at all times the polarity of the sensor estimating model, i.e., whether the NOx signal increases or decreases with increasing amounts of stored ammonia. Hence, the model inherently "knows" at all times on which side of the characteristic in Figures 5 and 6 it actually is.

The detection of an erroneous output and its recovery method can be formulated as follows:
Case 1: "Divergence to NOx side", i.e. NH3 is detected as NOx:
   The detection of the wrong polarity (wrong operating point) is dependent on the following conditions, which must be fulfilled during a (temperature dependent) time period:
      - Set point for stored NH3 is persistently increasing
      - No NH3 slip is estimated
      - Controller's feedback is negative, i.e., the signal of the NOx sensor increases with decreasing NH3 storage level.
   For recovery the wrong polarity: The amount of stored NH3 is increased by a ramp, until the calculated NOx sensor signal equals the measured one on the right hand side (see the arrow on Figure 6).
Case 2: "Divergence to NH3 side", i.e. NOx is detected as NH3:
   The detection of the wrong polarity is dependent on the following conditions, which must be fulfilled during a (temperature dependent) time period:
      - Set point for stored NH3 is persistently decreasing
      - Significant NH3 slip occurs in the model
      - Controller's feedback is positive, i.e., NOx signal decreases with increasing NH3 storage level

For recovery, the amount of stored NH3 is decreased by a ramp, until the calculated NOx sensor signal equals the measured one on the left hand side (see the arrow in Figure 5).

Once the recovery has become effective, the NOx controller or the NH3 slip limitation described above either brings the system to the desired NOx conversion efficiency or limits the NH3 emissions to the maximum level.

This invention can be implemented advantageously in a computer program comprising program code means for performing one or more steps of such method, when such program is run on a computer. For this reason the patent shall also cover such computer program and the computer-readable medium that comprises a recorded message, such computer-readable medium comprising the program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof.

Further implementation details will not be described, as the man skilled in the art is able to carry out the invention starting from the teaching of the above description.

## Claims

1. Method for controlling an SCR catalytic converter of a vehicle, comprising the step of using as reference value an output of an estimated sensor of nitrogenated gases by forcing the estimated sensor output to converge to a measured value, wherein, in an observer, the convergence is forced by means of adjusting the amount of stored ammonia or other state variables using variable feedback gains, which are dependent on the operating conditions such as temperature, space velocity, stored ammonia or others, wherein the quantity or sign of the feedback gains in the observer are used to detect divergence and to initiate a recovery step from said divergence, said divergence being due to a wrong interpretation of the NOx sensor signal, caused by the NH3/NOx ambiguity of the sensor characteristic.

2. Method according to claim 1, wherein the convergence is forced by means of additional adjusting of constant to slowly drifting parameters such as catalyst storage capacity or offsets of urea injection or sensors, or urea quality.

3. Method according to claim 1, wherein said recovery step provides for adjusting the amount of stored ammonia or other quantities in the observer, such as to converge to the correct side of the NOx sensor characteristic.

4. Method according to one of the claims 1 to 3, wherein, if a divergence is detected, because a non-present NH3 slip is detected or because a present NH3 slip is not detected, the controller inverts the stored NH3 and NOx sensor polarity for the calculation of the present operating point on the sensor characteristic.

5. Method according to claim 1, wherein said nitrogenated gases are NOx and/or NH3, and/or NO2, and/or NO, and/or N20.

6. Method according to any of the preceding claims, further comprising the step of considering the SCR catalytic converter as divided in a succession of two or more storage cells, and the step of controlling the NH3 stored only in one of said cells, preferably the first one.

7. Method according to any of preceding claims, further comprising the step of controlling an injected urea quantity or NH3 quantity or any other reduction agent which is converted into NH3, by means of a calculation of a catalyst conversion efficiency.

8. Method according to any of claims 1 to 6, further comprising the step of controlling an injected urea quantity or NH3 quantity or any other reduction agent which is converted into NH3, a urea injection, by means of a calculation of a NH3 slip level in the SCR catalytic converter.

9. Method according to any of claims 7 or 8, wherein the injected urea quantity, or NH3 quantity or any other reduction agent which is converted into NH3, is controlled by means of both set points calculated by imposing as target an NH3 storage level and a catalyst conversion efficiency.

10. Method according to claim 9, wherein said set points are calculated separately and wherein the actual control set point is obtained from a minimum selection of said set points.

11. Method according to any of the preceding claims, wherein, if no sensor is available or the NOx or NH3 sensor output is not or partly reliable, the corresponding feedback gain is adjusted or switched to zero.

12. Device for controlling an SCR catalytic converter of a vehicle, comprising means for implementing the method of any of the preceding claims.

13. Computer program comprising computer program code means adapted to perform all the steps of claim 1 to 12, when said program is run on a computer.

14. A computer readable medium having a program recorded thereon, said computer readable medium comprising computer program code means adapted to perform all the steps of claim 1 to 12, when said program is run on a computer.

## Patentansprüche

1. Verfahren zur Steuerung eines SCR-Katalysatorwandlers eines Fahrzeugs, umfassend den Schritt der Verwendung einer geschätzten Sensorausgabe stickstoffhaltiger Gase als Referenzwert, indem forciert wird, dass die geschätzte Sensorausgabe sich an einen gemessenen Wert annähert, wobei in einem Beobachter die Annäherung durch die Einstellung der Menge an gespeichertem Ammoniak oder anderer Zustandsvariablen, die variable Rückmeldungsstellfaktoren nutzen, forciert wird, die abhängig von den Betriebsbedingungen wie Temperatur, Raumgeschwindigkeit, gespeichertem Ammoniak oder anderen sind, wobei die Menge oder das Zeichen der Rückmeldestellfaktoren im Beobachter verwendet wird, um eine Divergenz zu detektieren und einen Rückstellschritt von der Divergenz zu initiieren, wobei die Divergenz einer fehlerhaften Interpretation des NOₓ-Sensor-Signals geschuldet ist, das durch die NH₃/NOₓ-Ambiguität der Sensorcharakteristik verursacht wird.

2. Verfahren gemäß Anspruch 1, wobei die Annäherung mittels einer zusätzlichen Einstellung von konstant bis langsam driftenden Parametern wie der Katalysatorspeicherkapazität oder Versätzen von Hamstoffinjektionen oder Sensoren oder der Harnstoffqualität forciert wird.

3. Verfahren nach Anspruch 1, wobei der Rückstellschritt für die Einstellung der Menge an gespeichertem Ammoniak oder anderer Mengen in dem Beobachter sorgt zum Beispiel zum Annähern an die korrekte Seite der NOₓ-Sensorcharakteristik.

4. Verfahren nach einem der Ansprüche 1 bis 3, wobei, wenn eine Divergenz detektiert wird, weil ein nicht vorhandener NH₃-Rutsch detektiert wird, oder weil ein vorhandener NH₃-Rutsch nicht detektiert wird, der Regler die gespeicherte NH₃- und NOₓ-Sensorpolarität zur Berechnung des vorliegenden Betriebspunktes auf der Sensorcharakteristik invertiert.

5. Verfahren nach Anspruch 1, wobei die stickstoffhaltigen Gase NOₓ und/oder NH₃, und/oder NO₂ und/oder NO und/oder N₂O sind.

6. Verfahren nach einem der vorangehenden Ansprüche, weiterhin umfassend den Schritt des Berücksichtigens des SCR-Katalysatorwandlers als aufgeteilt in eine Aufeinanderfolge von zwei oder mehreren Speicherzellen und den Schritt des Regelns des NH₃, das in nur einer dieser Zellen, bevorzugt der ersten gespeichert ist.

7. Verfahren gemäß einem der vorangehenden Ansprüche, weiterhin umfassend den Schritt des Regelns einer injizierten Harnstoffmenge oder NH₃-Menge oder irgendeines anderen Reduktionsmittels, das zu NH₃ umgesetzt wird, mittels einer Berechnung einer Katalysatorkonversionseffizienz.

8. Verfahren nach einem der Ansprüche 1 bis 6, weiterhin umfassend den Schritt des Regelns einer injizierten Harnstoffmenge oder NH₃-Menge oder irgendeines anderen Reduktionsmittels, das zu NH₃ umgesetzt wird, einer Harnstoffinjektion mittels einer Berechnung eines NH₃-Rutschlevels in dem SCR-Katalysatorwandler.

9. Verfahren gemäß irgendeinem der Ansprüche 7 oder 8, wobei die injizierte Harnstoffmenge oder die NH₃-Menge oder irgendein anderes Reduktionsmittel, das zu NH₃ umgesetzt wird, geregelt wird mittels beider Stellwerte, die dadurch berechnet werden, dass ein NH₃-Speicherlevel und eine Katalysatorkonversionseffizienz als Ziel vorgegeben werden.

10. Verfahren nach Anspruch 9, wobei die Stellwerte getrennt berechnet werden und wobei der Ist-Steuerungsstellwert erhalten wird aus einer Minimum-Wahl dieser Stellwerte.

11. Verfahren nach einem der vorangehenden Ansprüche, wobei, wenn kein Sensor verfügbar ist oder die NOₓ oder NH₃-Sensorausgabe nicht oder teilweise nicht zuverlässig ist, der entsprechende Rückmeldestellfaktor eingestellt wird oder auf null geschaltet wird.

12. Vorrichtung zur Steuerung eines SCR-Katalysatorwandlers eines Fahrzeugs, umfassend Mittel zur Implementierung des Verfahrens nach einem der vorangehenden Ansprüche.

13. Computerprogramm, umfassend Computerprogrammcodemittel, angepasst, um all die Schritte der Ansprüche 1 bis 12 auszuführen, wenn das Programm auf einem Computer ausgeführt wird.

14. Computerlesbares Medium, enthaltend ein darauf gespeichertes Programm, wobei das computerlesbare Medium Computerprogrammcodemittel umfasst, die angepasst sind, all die Schritte der Ansprüche 1 bis 12 auszuführen, wenn das Programm auf einem Computer ausgeführt wird.

## Revendications

1. Procédé de commande d'un convertisseur catalytique SCR d'un véhicule, comprenant l'étape consistant à utiliser comme valeur de référence une sortie d'un capteur estimé de gaz azotés en forçant la sortie de capteur estimé à converger à une valeur mesurée, dans lequel, dans un observateur, la convergence est forcée en ajustant la quantité d'ammoniac stocké ou d'autres variables d'état en utilisant des gains de rétroaction variables qui dépendent des conditions de fonctionnement telles que la température, la vitesse spatiale, l'ammoniac stocké ou autres, où la quantité ou signe des gains de rétroaction dans l'observateur sont utilisés pour détecter la divergence et pour initier une étape de récupération de ladite divergence, ladite divergence étant due à une fausse interprétation du signal du capteur des NOx, provoquée par l'ambiguïté NH3/NOx des caractéristiques du capteur.

2. Procédé selon la revendication 1, dans lequel la convergence est forcée par un ajustement additionnel d'une constante pour dériver lentement des paramètres, comme la capacité de stockage du catalyseur ou des compensations de l'injection d'urée ou capteurs, ou la qualité de l'urée.

3. Procédé selon la revendication 1, dans lequel ladite étape de récupération permet l'ajustement de la quantité d'ammoniac stockée ou d'autres quantités dans l'observateur, de manière à converger vers le côté correct de la caractéristique du capteur des NOx.

4. Procédé selon l'une des revendications 1 à 3, dans lequel, si une divergence est détectée, parce qu'un glissement de NH3 non présent est détecté, ou parce qu'un glissement de NH3 présent n'est pas détecté, le dispositif de commande inverse la polarité stockée des capteurs de NH3 et de NOx pour le calcul du présent point de fonctionnement sur la caractéristique du capteur.

5. Procédé selon la revendication 1, dans lequel lesdits gaz azotés sont NOx et/ou NH3, et/ou NO2, et/ou NO et/ou N20.

6. Procédé selon l'une quelconque des revendications précédentes, comprenant en outre l'étape consistant à considérer le convertisseur catalytique SCR comme étant divisé en une succession de deux ou plusieurs cellules de stockage, et l'étape de commande du NH3 stocké seulement dans une desdites cellules, de préférence dans la première.

7. Procédé selon l'une quelconque des revendications précédentes, comprenant en outre l'étape consistant à commander une quantité d'urée injectée ou quantité NH3 ou n'importe quel autre agent réducteur qui est converti en NH3, au moyen d'un calcul de l'efficacité de conversion du catalyseur.

8. Procédé selon l'une quelconque des revendications 1 à 6, comprenant en outre l'étape consistant à commander une quantité d'urée injectée ou quantité NH3 ou n'importe quel autre agent réducteur qui est converti en NH3, une injection d'urée, au moyen d'un calcul d'un niveau de glissement de NH3 dans le convertisseur catalytique SCR.

9. Procédé selon l'une quelconque des revendications 7 ou 8, dans lequel la quantité d'urée injectée, ou la quantité de NH3 ou n'importe quel autre agent réducteur qui est converti en NH3, est commandée à la fois au moyen de points réglés calculés en imposant comme cible un niveau de stockage de NH3 et une efficacité de conversion du catalyseur.

10. Procédé selon la revendication 9, dans lequel lesdits points réglés sont calculés séparément, et où le point réglé de commande actuel est obtenu d'une sélection minimum desdits points réglés.

11. Procédé selon l'une quelconque des revendications précédentes, dans lequel, si aucun capteur n'est disponible ou si la sortie des capteurs des NOx ou de NH3 n'est pas ou est seulement partiellement fiable, le gain de rétroaction correspondant est ajusté ou commuté à zéro.

12. Dispositif pour la commande d'un convertisseur catalytique SCR d'un véhicule, comprenant des moyens pour la mise en oeuvre du procédé selon l'une quelconque des revendications précédentes.

13. Programme d'ordinateur comprenant un moyen de code programme d'ordinateur apte à exécuter toutes les étapes des revendications 1 à 12, lorsque ledit programme est exécuté sur un ordinateur.

14. Support lisible par ordinateur ayant un programme enregistré sur celui-ci, ledit support lisible par ordinateur comprenant un moyen de code programme d'ordinateur apte à exécuter toutes les étapes des revendications 1 à 12, lorsque ledit programme est exécuté sur un ordinateur.
